# EUROPEAN PATENT SPECIFICATION

(11) **EP 1 884 653 B1**
(45) Date of publication and mention of the grant of the patent: **02.11.2011**
(21) Application number: 07113066.0
(22) Date of filing: 24.07.2007
(51) Int. Cl.: F02M 37/10

(54) **Fuel delivery module and adapter**
Brennstoffabgabemodul und -adapter
Module de livraison de carburant et adaptateur

(30) Priority: 02.08.2006 GB 0615301
(43) Date of publication of application: 06.02.2008
(73) Proprietor: Nissan Motor Manufacturing (UK) Ltd., Cranfield Bedfordshire MK43 0DB (GB)
(72) Inventor: Kavanagh, Robert, Nissan Motor Manufacturing (UK) Ltd, Cranfield, Bedfordshire MK43 0DB (GB)
(74) Representative: Hufton, Victoria Alice

(56) References cited:
- DE-A1- 19 602 819
- GB-A- 2 328 659
- GB-A- 2 345 045
- US-A1- 2003 057 212
- US-B1- 6 516 964

## Description

This invention relates to a fuel delivery module for an internal combustion engine, and more particularly, to a universal cover element for such a fuel delivery module, which is compatible with more than one engine type. The invention also relates to a universal connector for use with a fuel delivery module.

A conventional fuel supply system for an internal combustion engine comprises a fuel tank that stores the bulk of the fuel for the engine, and mounted inside the fuel tank, a fuel delivery module to deliver fuel under pressure to the fuel rail and fuel injectors of the engine. In a gasoline engine, the fuel delivery module typically comprises a fuel pump for delivering fuel from the fuel tank, and a cover element that includes outlet and/or inlet ports for allowing fuel flow, and which may or may not also incorporate mounting means for mounting the fuel delivery module inside the fuel tank. In addition, a fuel delivery module may include a fuel reservoir housing in fluid communication with the fuel tank. Fuel filters and various other elements, such as fuel level indicators and fuel additive cartridges, may also be incorporated.

In a diesel engine the fuel pump is normally situated externally of the fuel reservoir housing, so that the fuel delivery module for a diesel engine does not itself incorporate the fuel pump.

When present, the fuel reservoir housing is generally cylindrical in shape and, under normal operating conditions, contains a predetermined level of fuel for feeding the fuel pump. This system ensures that there is a constant supply of fuel to the fuel pump and hence to the vehicle engine, irrespective of the inclination of the fuel tank (e.g. when the vehicle is travelling uphill), and to a large extent, irrespective of the level of fuel in the fuel tank itself. To keep a constant level of fuel in the fuel reservoir housing a secondary, low-pressure pump may be used to pump fuel from the fuel tank into the fuel reservoir housing.

The cover element may be fitted with electrical connections for supplying electricity to the fuel pump, if provided, and with either one or two outlet/inlet ports (i.e. openings in the lid having integral connectors/adapters). These ports are used to connect to engine pipes/conduits in order to transfer fuel from the fuel delivery module to various engine parts, and in some cases to return fuel to the fuel delivery module. For example, typically in a diesel engine, a return line (conduit) is necessary, whereas in a gasoline engine only an outgoing line is used.

The orientation of the ports is (pre)determined at the time of manufacture of the cover element, according to the particular engine in which the fuel delivery module is to be fitted. Since there are many different engine types, a large number of fuel delivery module cover elements are necessary, each with specifically positioned outlet/inlet ports. It is therefore necessary for a manufacturer of vehicle engine parts to produce a range of different cover elements. For such a basic function as connecting a fuel delivery module to an engine, this requirement involves inconvenient and undesirable expense.

Hence, it would be desirable to have a cover element and hence a fuel delivery module that can be fitted into many engine types, thereby eliminating the need to manufacture several alternative cover elements to perform the same function.

The closest prior art document GB2928659 discloses a fuel delivery module according to the characterising part of claim 1.

Furthermore, where vehicle engine parts inter-connect via conduits/pipes, the connectors linking the pipes/conduits may be of different types, depending on the type of engine and the engine specifications. For example, in territories where vehicle emissions regulations are not so stringent, manufacturing costs may be reduced by using rubber "fir-tree" connectors. However, in cases where the vehicle emissions regulations are strict, a better but more expensive solution is to use "quick-connectors". By way of example, such a connector is necessary to join the cover element of a fuel delivery module to the conduits/pipes that serve the downstream engine components.

The variability in connector types once again means that it is necessary for an engine part manufacturer to produce different components (that perform essentially the same function), according to the type of conduit/pipe connection to be used. Again, this is also an undesirable situation.

Therefore, a need exists for a means for inter-connecting engine pipes/conduits, especially interconnecting the fuel delivery module of an engine to other engine parts, which obviates the need to manufacture several alternate parts.

According to the present invention, there is provided a fuel delivery module cover element comprising a lid having a plurality of pre-marked regions (23) corresponding to potential outlet and inlet port locations; said pre-marked regions comprising mechanically weakened regions configured such that outlet and inlet ports may be formed after manufacture of the cover element by creating an opening in the lid at one or more of said mechanically weakened regions; **characterised in that** said pre-marked regions indicate potential outlet and inlet port locations compatible with more than one engine type; and in that said pre-marked regions are identified against the particular engine type for which that port location is required.

The orifice (opening) may be formed by drilling, punching, or stamping.

A port may be made in the lid by inserting an adapter through a pre-marked port location in the lid.

The lid of the cover element may be manufactured from any suitable material, for example, a metal or plastics material.

The pre-marked regions may be marked on the underside or the topside of the lid. However, preferably the markings are on the topside of the lid, so that the marked regions are visible even when the cover element is attached to a fuel delivery module. The marks identifying the potential port locations can be made in any appropriate manner, provided that they remain visible for a reasonable period of time after manufacture of the cover element, i.e. they should not be removable accidentally, e.g. by inadvertently touching the marks before the component has been fitted to a vehicle. Thus, the markings are preferably semi-permanent or permanent. By "semi-permanent" it is meant that the markings cannot be removed by washing the cover element in water, or preferably, the markings cannot be removed by washing the cover element in an organic solvent. For example, the markings can be made using a suitable ink or paint, by moulding (e.g. of a plastics material, such as by vacuum forming or pressing), or by printing, stamping or scoring of the surface of the lid.

The marks may be made by printing, stamping or scoring of the surface, and most preferably, by printing or stamping of the lid.

The pre-marked areas may also correspond to regions of mechanically weakened material. Accordingly, it is more preferable that the methods used for marking the potential port locations also have the benefit of causing the underlying material to become mechanically weakened in comparison to non-marked areas; for example, by reducing the thickness of the material at the specific locations. This is the case when methods such as printing, stamping or scoring are used to mark the surface of the lid.

By "mechanically weakened" it is meant that the material of the lid that is marked can withstand a lower pressure/force before breaking than the material of the lid that is unmarked. Where the marked area corresponds to the circumference of a port opening/orifice, the mechanically weakened area may also extend into the area within the marked circumference. Mechanically weakened areas may be produced by creating continuous or discontinuous indentations in the surface of the lid, such as lines or holes (e.g. blind holes); or semi-perforations (i.e. short, discontinuous perforations that do not pass completely through the material of the lid). Contrary to the definition of "perforation", it is important that the perforations do not pass completely through the material of the lid to create a hole; hence, the term "semi-perforation" is used. The semi-perforations may be in the form of a circle to form an annulus of mechanically weakened material.

In embodiments where mechanically weakened areas are formed in the lid by indentations, for aesthetic or practical reasons, the indentations may be made on the underside of the lid. In this case, it may be advantageous to additionally mark the regions of reduced mechanical strength on the topside of the lid, using ink or for example, paint as already discussed.

Thus, in one embodiment, a plurality of blind holes (i.e. semi-drilled holes that do not pass fully through the thickness of the lid) may be made on the underside of the lid, and the locations of each of the blind holes marked on the topside of the lid with ink, paint, or another suitable manner.

The number of pre-marked regions may be determined by two main factors. First, the number of engines that require different arrangements of port geometries leading from and/or to the fuel delivery module; and second, the required level of universality of the cover element.

Typically, the lid has at least two pre-marked regions indicating potential port locations, e.g. 2, 3, 4, 5, 6, 7, 8, 9, 10 or more pre-marked regions. Preferably, the lid has 2 to 10, 3 to 8, or 4 to 6 pre-marked port locations.

These regions may be marked specifically or non-specifically. Hence, in an embodiment where the regions are marked specifically, the potential port locations are set out according to the required port geometries for more than one known engine type. For example, the pre-marked regions may represent potential port locations suitable for use with two different engine types. Alternatively, the pre-marked regions may indicate the necessary port locations for 3, 4, 5, 6, 7, 8, 9, 10 or more different engine types. More preferably, the lid of the cover element has markings corresponding to the necessary port locations/geometries of 2 to 6, or 3 to 5 known engine types.

Each of the potential port locations may be further marked to identify the particular engine type for which that port location is required. Alternatively, instructions may be provided that indicate the necessary port locations for use in each of the various engine types.

In an alternative embodiment, the potential port locations may be non-specifically indicated. For example, the pre-marked regions may be (randomly) distributed over the surface of the lid of the cover element; requiring the end-user to make an informed decision as to which of the potential ports to use. This embodiment may be advantageously used in newly manufactured engines where the port locations could not have been known before manufacture of the cover element.

In another embodiment the lid may contain a combination of both specifically and non-specifically pre-marked regions. Thus, the cover element may be potentially used with pre-known as well as with previously unknown engine types.

The cover element may be provided with first attachment means. The first attachment means allows the cover element to be attached to a fuel delivery module. The attachment means may comprise all of the necessary components for attaching to the fuel delivery module directly, or may merely comprise sufficient structural features to enable it to be connected to components of the fuel delivery module, or to be connected thereto using auxiliary means, such as bolts, screws, clamps, clips etc.

Although it is envisaged that the cover element is attached permanently to the fuel delivery module (e.g. it may be formed integrally with the fuel delivery module), the cover element may be demountably/releasably attachable to the fuel delivery module. Thus, it is preferable that the cover element may be removed from and re-attached to the fuel delivery module, as desired.

Any suitable means of attachment may be used, e.g. clips, screws, bolts, clamps etc. Alternatively, the cover element may comprise a screw-threaded surface that can be screwed directly onto a compatible surface of the fuel delivery module. In another embodiment, the cover element may simply have a screw-threaded bore for accepting a screw or bolt, or a lip for accepting a clip or clamp. Preferably, the attachment means is a clip.

As noted above, in use, the fuel delivery module is generally fitted inside the fuel tank of a vehicle. In order to hold it in a stable position inside the fuel tank, the fuel delivery module is preferably mounted onto the fuel tank. Any appropriate attachment means may be used for this purpose. This mounting means may be a second attachment means that is provided as part of the cover element.

The second attachment means may be configured to attach the fuel delivery module to the fuel tank of a vehicle in a demountable/releasable manner, such that it can be removed from the fuel tank and re-attached as necessary. As in the case of the first attachment means discussed above, the second attachment means may, for example, comprise a lip (e.g. a radially extending flange), which engages with a complementary surface of the fuel tank. These components may then be clamped or screwed in place, as required. Alternatively, a screw-threaded portion may be used as an attachment means, or screw, bolts etc.

Sealing rings may also be employed between a surface of the cover element and the fuel delivery module, and/or between a surface of the fuel delivery module (or cover element) and the fuel tank, in order to create a fluid-tight seal.

Once a desired port location has been selected, the port opening/orifice may be formed in any suitable manner. It is advantageous, however, if ports in the cover element can be formed fairly simply, for example, by drilling a hole in the appropriate location. Alternatively, where the potential port locations correspond to regions of reduced mechanical strength, port openings/orifices may beneficially be formed by applying a mechanical pressure to the appropriate region of the lid (for example, punching or stamping the surface).

Accordingly, the invention also relates to a cover element as described above, wherein one or more ports have been introduced into the lid of the cover element.

For improved compatibility with different engine types it is advantageous for the ports of the cover element of the invention, once formed, to be compatible with different types of conduit/pipe connectors or adapters. In this regard, such different types of connectors/adapters include rubber "fir-tree" connectors, and "quick-connectors".

Once formed, the ports of the cover element of the invention may be compatible with both rubber "fir-tree" connectors and "quick-connectors". In this way, it is not necessary to produce separate cover elements for use in engines that require these different types of connector.

Furthermore according to the present invention there is provided a fuel delivery module for a vehicle comprising a cover element as described herein. Thus, in accordance with this aspect of the invention there is provided a fuel delivery module for a motor vehicle, comprising: means for mounting the fuel delivery module inside a fuel tank of said motor vehicle; a cover element as described herein, and wherein the cover element has at least one port.

As discussed, in use the fuel delivery module is positioned inside the fuel tank of a vehicle.

The fuel delivery module may further comprise a fuel reservoir housing. The fuel reservoir housing comprises means for allowing fluid communication with the fuel tank of a vehicle, such that, in use, fuel can pass from the fuel tank into the fuel reservoir housing before it is then delivered through an outlet port in the cover element to the downstream engine components.

The fuel delivery module further may comprise a primary fuel pump for pumping fuel from the fuel tank or the fuel reservoir housing, when present, to an outlet port of the cover element.

The primary fuel pump may be a high-pressure fuel pump (e.g. at least 200 bar, preferably at least 500 bar, more preferably at least 1000 bar) for pumping fuel to the downstream engine components at a relatively high pressure. Alternatively, the primary fuel pump may be a relatively low-pressure pump, which functions to deliver fuel to the outlet port of the cover element. Downstream fuel pumps may then be employed to attain the high fuel pressure necessary in downstream engine components. The primary fuel pump may be positioned inside or outside of the fuel reservoir housing, depending on the engine type. For example, in a gasoline engine the fuel pump is typically situated inside the fuel reservoir housing and in a diesel engine the fuel pump is generally situated outside of the fuel reservoir housing. Preferably, however, the (primary) fuel pump is positioned inside the fuel reservoir housing.

The fuel delivery module may also include a secondary fuel pump. When used, the secondary fuel pump is used to pump fuel from the fuel tank into the fuel reservoir housing, so as to help maintain a working level of fuel in the fuel reservoir housing for supplying the primary fuel pump. The secondary fuel pump thus helps to maintain a relatively constant level of fuel in the fuel reservoir housing even though the level of fuel in the fuel tank may fluctuate. The secondary fuel pump may be a low-pressure fuel pump, because it is not necessary to pump fuel into the fuel reservoir housing under high pressure.

The fuel reservoir housing is preferably positioned inside the fuel tank in contact with the upper surface of the base of the fuel tank (i.e. the inner face of the fuel tank base), and the cover element of the fuel delivery module is preferably mounted onto another surface, more preferably, the top surface of the fuel tank.

The fuel reservoir housing may extend the full height of the fuel tank (i.e. from the base to the point at which the cover element is mounted). In this way, it is possible that the cover element forms a surface of the fuel reservoir housing, e.g. by performing the function of a lid.

However, in an alternative embodiment, the fuel reservoir housing may be self-contained, and physically separated from the cover element. In this embodiment, a means of fluid communication is necessary between the cover element and the fuel reservoir housing, to enable fuel to be delivered to downstream engine components. The means of fluid communication is preferably a conduit or pipe, which has one opening into an outlet of the fuel reservoir housing, and a second opening into an outlet port of the cover element. There may be more than one conduit or pipe between the cover element and the fuel reservoir housing, e.g. 2, 3 or 4 conduits. Thus, there may be a second or further means of fluid communication between, for example, an inlet port of the cover element and an inlet to the fuel reservoir housing.

Such conduits or pipes may be made of any appropriate material. In a preferred embodiment, the conduit(s)/pipe(s) are made of nylon.

The fuel reservoir housing is preferably mounted in a fixed position with respect to the fuel tank of the vehicle and, more preferably, also with respect to the cover element. For example, the fuel reservoir housing may be fixed to the base of the fuel tank, e.g. using bolts, screws, welding etc. to connect a surface of the fuel reservoir housing to a surface of the fuel tank.

Alternatively, or in addition, the fuel reservoir housing may be located by fixing its position relative to the cover element. The cover element is typically attached directly to the fuel tank and is therefore in a fixed position relative to the fuel tank of the vehicle. Thus, the fuel reservoir housing is most preferably rigidly connected or connectable to the cover element. Any suitable means for rigidly connecting the fuel reservoir housing and the cover element may be employed. For example, the cover element and fuel reservoir housing may be connected via one or more (e.g. 1, 2, 3 or 4) rigid rods. More preferably, the fuel delivery device comprises two rods for maintaining the fuel reservoir housing and the cover element at a predetermined separation. A preferred rod is a steel rod.

In a more preferred embodiment, one or more of the rigid rods contains a through bore, which acts as a means of fluid communication between the fluid reservoir housing and the cover element. In this way, it is not necessary to have additional conduits or pipes between the fluid reservoir housing and the cover element. Preferably, the surface of the through bore is coated with a relatively inert surface, e.g. a nylon coating.

Advantageously, the length of the one or more rigid rods is adjustable (i.e. the one or more rods are extendible), such that the separation between the fuel reservoir housing and the cover element can be adjusted to suit the size of fuel tank in which the fuel delivery module is to be used. For example, the length of the one or more rods may be adjustable in the range 10 cm to 40 cm, preferably 15 cm to 35 cm, and more preferably 20 cm to 30 cm.

Any suitable means of adjusting the length of the rod(s) may be employed. For example, the rods may be formed of short inter-connectable sections, which can be connected by welding, using compatible screw-threaded portions, or with bolts, clamps etc. Beneficially, however, the rigid rods are telescopic.

The fuel delivery module may additionally include auxiliary components, which improve the operation of the device. Thus, in an embodiment of the invention, for example, the fuel delivery module may include a means for detecting the level of fuel in the fuel tank and/or in the fuel reservoir housing (e.g. a fuel gauge). A fuel gauge can be used to detect the level of fuel in the fuel tank of the vehicle and send an appropriate signal to an indicator means; and it can also be used to detect the level of fuel in the fuel reservoir housing and send a signal to a secondary fuel pump to maintain the desired level of fuel in the fuel reservoir housing. Other suitable auxiliary components/devices will be readily apparent to the person of skill in the art.

An adapter for connecting a fuel delivery module to an engine component or conduit comprises: a body having at least two ports; and a through bore defining a fluid path between said at least two ports; wherein at least one of said ports is of a first type and at least one of said ports is of a second type. For example, the first type of port may be a "quick-connector" port and the second type of port may be a (rubber) "fir-tree" connector port.

The adapter may have 2, 3 or 4 ports. Preferably, however, there are two ports, and in this embodiment, the adapter has a first port that is e.g. a "quick-connector" port and a second port that is e.g. a (rubber) "fir-tree" connector port. Thus, the adapter can advantageously be used to interconnect: (i) a first component requiring a "quick-connector" port to a second component requiring a rubber "fir-tree" connector port; or (ii) a first component requiring either a "quick-connector" port or a rubber "fir-tree" connector port to a second component that is compatible with both a "Quick" connector port and a rubber "fir-tree" connector port.

Thus, when used in conjunction with a device that can accept either a "quick-connector" or a rubber "fir-tree" connector (e.g. the above-discussed cover element and fuel delivery module), the opposite end of the adapter can be selected according to the predetermined port-type required in the particular engine.

In one embodiment, the body of the adapter is flexible, e.g. it is made from a flexible material, such as nylon or a rubber or plastics material. Preferably, however, the body of the adapter is rigid. Such a rigid adapter may beneficially be made of a plastics or metal material. More preferably, the body is made of a metal material, e.g. steel, copper.

The body of the adapter may be formed into any suitable shape. Advantageously, the adapter is "L" shaped, such that the body of the adapter is bent through an angle of approximately 90°. In this form, the body of the adapter may be considered to comprise two "arms", one of which terminates in a "quick-connector" port and one of which terminates in a rubber "fir-tree" connector port.

The adapter of the invention may further include at least two flanges (e.g. 2, 3 or 4 flanges), each flange extending radially outwards of the body of the adapter. Preferably, one flange is associated with each port of the adapter. Thus, where the body of the adapter comprises two arms, there is one flange on each arm.

Advantageously, a flange provides a means of sealingly engaging the adapter with an engine component, e.g. a cover element of a fuel delivery module. For example, once a port of the adapter has been connected to a cover element of a fuel delivery module, the flange is brought into contact with a surface of the cover element (i.e. the lid), and it may then be welded to that surface so as to form a fluid tight seal. Other appropriate forms of sealing may also be employed, such as glue, screws, bolts etc, provided a fluid-tight seal is formed.

Each flange may have the form of circular disk, extending radially outwards from the body of the adapter, and is positioned a short distance from its respective port. Thus, each flange is preferably located less than 15 cm from the outlet of the respective port, more preferably less and 12 cm, less than 10 cm, less than 8 cm, or less than 5 cm from the respective port outlet.

The adapter may be compatible with a cover element and a fuel delivery module as described hereinbefore.

The invention will now be described with reference to the following figures, in which:
Figure 1 is a perspective view of a fuel delivery module according to the invention; and
Figure 2 is a perspective view of an adapter according to the invention.
Figure 3 is a schematic representation of the adapter of Figure 2 connected to a cover element according to the invention.

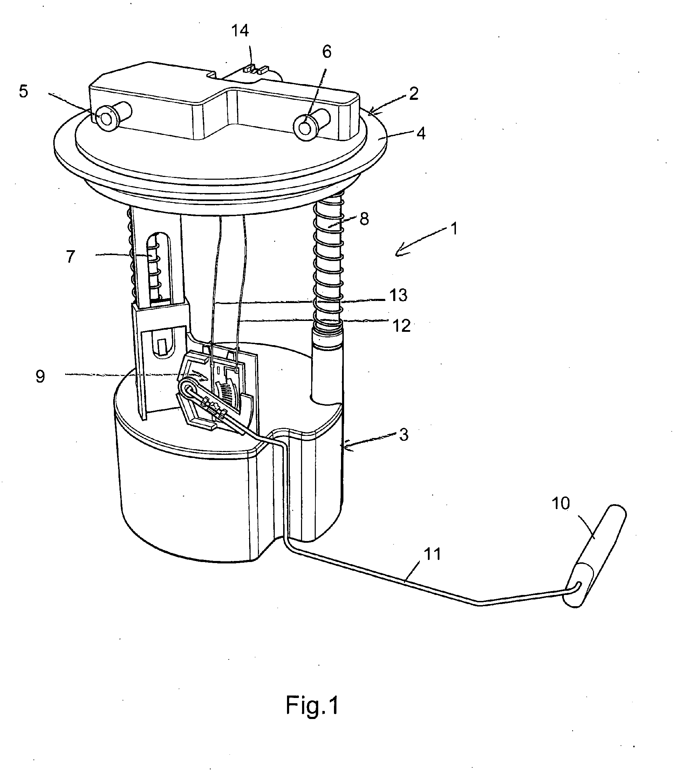

Referring to Figure 1, a fuel delivery module 1 comprises a cover element 2 and a fuel reservoir housing (swirl pot) 3. The cover element 2 comprises a lid 4 that is adapted to sealingly engage with a surface of a vehicle fuel tank

(not shown) through attachment means (also not shown); and ports 5, 6, which provide means of fluid communication between the fuel delivery module 1 and the engine of a vehicle (not shown). Outlet port 5 and inlet port 6 are in fluid communication with the fuel reservoir housing 3 via conduits 7, 8, respectively. The conduits 7, 8 are rigid rods that also function to maintain a predetermined separation between the cover element 2 and the fuel reservoir housing 3. The fuel reservoir housing 3 may contain a fuel pump (not shown), to pump fuel from the fuel reservoir housing 3, through conduit 7, and out through outlet port 5 to the engine. A fuel gauge 9 is mounted on a surface of the fuel reservoir housing 3 and measures the level of fuel in the fuel tank (not shown), using a float 10, which is attached to the fuel gauge 9 by a float arm 11. Wires 12, 13 allow signals to be sent, via electrical connector 14, from the fuel gauge to actuating means and/or indicators.

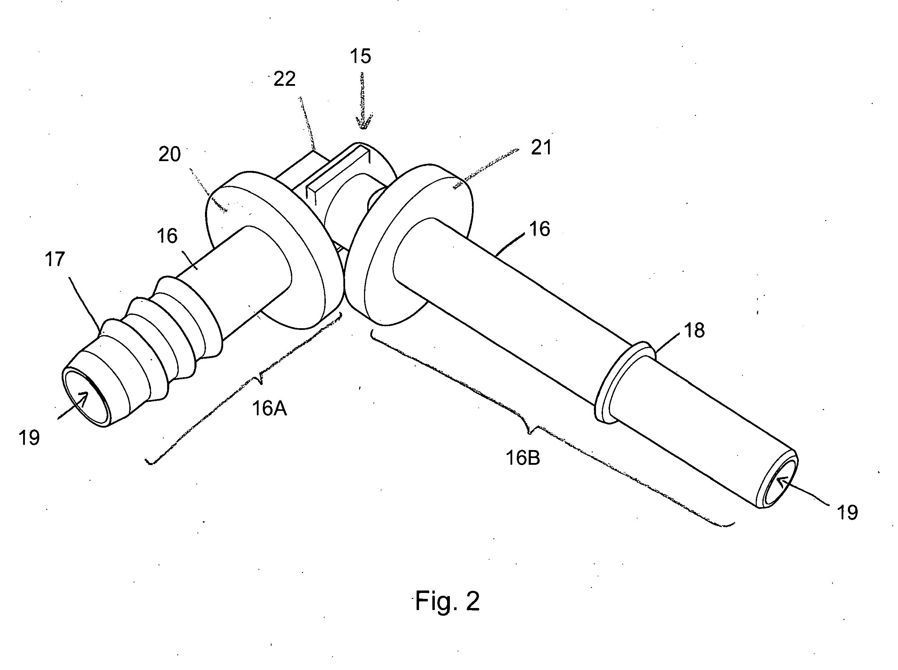

With reference to Figure 2, an adapter 15 for connecting a fuel delivery module (such as module 1 in Figure 1) to an engine component or conduit, comprises a body 16 having perpendicular arms 16A and 16B. Arm 16A terminates at a "fir-tree" connector port 17 and arm 16B terminates at a "Quick" connector port 18. A bore 19 passes through the entire length of the body 16 adapter 15. Two radially extending circular flanges 20, 21 are formed on arms 16A and 16B, respectively, such that flange 20 is associated with the "fir-tree" connector port 17, and flange 21 is associated with the "quick-connector" port 18. In the embodiment depicted, the body 16 is constructed of a rigid material and has a bend of approximately 90° at 22.

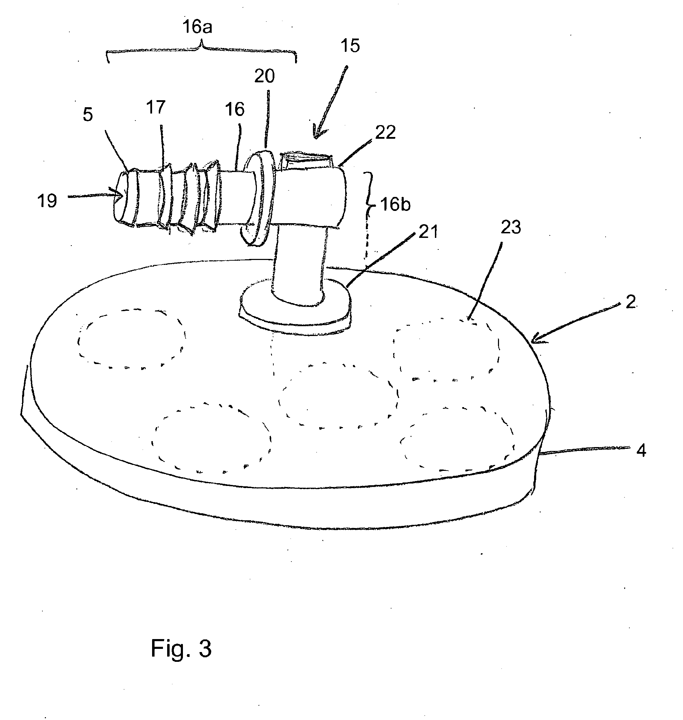

Figure 3 depicts an adapter 15 as shown in Figure 2, which has been connected to a cover element 2. The cover element 2 has a lid 4, which has a plurality of pre-marked regions 23 that indicate annular regions of reduced mechanical strength in the lid 4. The "quick-connector" port 18 (not shown) of the adapter 15 has been inserted through one of the pre-marked port locations in the lid 4 to form an outlet port 5. The flange 21 abuts the top surface of the lid 4 and may be sealed to the lid 4 by e.g. welding. The free end of the adapter 15 has a rubber "fir-tree" port 17 for connecting to a pipe, conduit or tube in an engine (not shown).

By selecting the appropriate port locations amongst the pre-marked regions 23 in the lid 4, the cover element 2 can be adapted to fit a desired engine type. The adapter 15 can be used to form one or more outlet and/or inlet ports 5, 6, respectively, in the cover element 2, according to the requirements of the engine. In addition, either arm 16A, 16B of the adapter 15 can be connected to the cover element 2, so as to leave either the "fir-tree" connector 17, or the "quick-connector" 18 at the free end of the adapter 15.

In this way, it is only necessary to manufacture one type of adapter and one type of cover element (thereby reducing design and machining costs), to enable the manufacture of cover elements and fuel delivery modules suitable for many different types of engine.

## Claims

1. A fuel delivery module (1) cover element (2) comprising a lid (4) having a plurality of pre-marked regions (23) corresponding to potential outlet and inlet port locations;
said pre-marked regions (23) comprising mechanically weakened regions configured such that outlet and inlet ports may be formed after manufacture of the cover element (2) by creating an opening in the lid (4) at one or more of said mechanically weakened regions;
**characterised in that** said pre-marked regions (23) indicate potential outlet and inlet port locations compatible with more than one engine type;
and **in that** said pre-marked regions (23) are identified against the particular engine type for which that port location is required.

2. The cover element (2) of Claim 1, wherein the opening in the lid is formed by drilling.

3. The cover element (2) of Claim 1, wherein the opening in the lid is formed by punching.

4. The cover element (2) of Claim 1, wherein the opening in the lid is formed by stamping.

5. The cover element (2) of Claim 1, wherein a port (5) is made in the lid (4) by inserting an adapter (15) through a pre-marked port location in the lid.

6. The cover element (2) of any preceding claim, further comprising first attachment means for releasably attaching the cover element (2) to the fuel delivery module (1) and/or a second attachment means for mounting said fuel delivery module (1) inside a fuel tank of a motor vehicle.

7. The cover element (2) of any preceding claim, wherein at least one opening has been formed in the lid (4) by removing at least one of said pre-marked regions to form an outlet port.

8. A fuel delivery module (1) for a motor vehicle, comprising:
means for mounting the fuel delivery module (1) inside a fuel tank of said motor vehicle; and
a cover element (2) according to claim 7.

9. The fuel delivery module (1) according to Claim 8, further comprising a primary fuel pump for pumping fuel from said fuel tank to an outlet port (5).

10. The fuel delivery module (1) of Claim 8 or Claim 9, further comprising a fuel reservoir housing (3) having means for fluid communication with said fuel tank.

11. The fuel delivery module (1) of Claim 10, wherein the fuel reservoir housing (3) is connected to the cover element (2) via at least one rod (7, 8), and wherein the fuel reservoir housing (3) is in fluid communication with one or more ports (5, 6) of the cover element (2) via one or more conduits.

12. The fuel delivery module (1) of any of Claims 8 to 11, further comprising means (9) for detecting the level of fuel in the fuel tank and/or the fuel reservoir housing (3).

## Patentansprüche

1. Abdeckelement (2) für ein Kraftstoffzufuhrmodul (1), umfassend einen Deckel (4) mit mehreren vormarkierten Regionen (23), die potentiellen Auslass- und Einlassanschlussorten entsprechen;
wobei die genannten vormarkierten Regionen (23) mechanisch geschwächte Regionen umfassen, die derart ausgebildet sind, dass Auslass- und Einlassanschlüsse nach der Herstellung des Abdeckelements (2) gebildet werden können, indem an einer oder mehreren der genannten mechanisch geschwächten Regionen eine Öffnung in dem Deckel (4) erzeugt wird;
**dadurch gekennzeichnet, dass** die genannten vormarkierten Regionen (23) potentielle Auslass- und Einlassanschlussorte andeuten, die mit mehr als einem Motortyp kompatibel sind;
und dass die genannten vormarkierten Regionen (23) in Bezug auf den speziellen Motortyp, für den dieser Anschlussort benötigt wird, **gekennzeichnet** sind.

2. Abdeckelement (2) nach Anspruch 1, wobei die Öffnung in dem Deckel durch Bohren gebildet wird.

3. Abdeckelement (2) nach Anspruch 1, wobei die Öffnung in dem Deckel durch Stanzen gebildet wird.

4. Abdeckelement (2) nach Anspruch 1, wobei die Öffnung in dem Deckel durch Prägen gebildet wird.

5. Abdeckelement (2) nach Anspruch 1, wobei ein Anschluss (5) in dem Deckel (4) erzeugt wird, indem ein Adapter (15) durch einen vormarkierten Anschlussort in dem Deckel gesteckt wird.

6. Abdeckelement (2) nach einem der vorangehenden Ansprüche, weiter umfassend erste Befestigungsmittel zum lösbaren Befestigen des Abdeckelements (2) an dem Kraftstoffzufuhrmodul (1) und/oder ein zweites Befestigungsmittel zum Anbringen des genannten Kraftstoffzufuhrmoduls (1) in einem Kraftstofftank eines Kraftfahrzeugs.

7. Abdeckelement (2) nach einem der vorangehenden Ansprüche, wobei mindestens eine Öffnung durch Entfernen von mindestens einer der genannten vormarkierten Regionen in dem Deckel (4) gebildet wurde, um einen Auslassanschluss zu bilden.

8. Kraftstoffzufuhrmodul (1) für ein Kraftfahrzeug, das Folgendes umfasst:
Mittel zum Anbringen des Kraftstoffzufuhrmoduls (1) in einem Kraftstofftank des genannten Kraftfahrzeugs; und
ein Abdeckelement (2) nach Anspruch 7.

9. Kraftstoffzufuhrmodul (1) nach Anspruch 8, weiter umfassend eine Hauptkraftstoffpumpe zum Pumpen von Kraftstoff von dem genannten Kraftstofftank zu einem Auslassanschluss (5).

10. Kraftstoffzufuhrmodul (1) nach Anspruch 8 oder Anspruch 9, weiter umfassend ein Kraftstoffbehältergehäuse (3) mit Mitteln für die Fluidverbindung mit dem genannten Kraftstofftank.

11. Kraftstoffzufuhrmodul (1) nach Anspruch 10, wobei das Kraftstoffbehältergehäuse (3) über mindestens eine Stange (7, 8) mit dem Abdeckelement (2) verbunden ist und wobei das Kraftstoffbehältergehäuse (3) über eine oder mehrere Leitungen mit einem oder mehreren Anschlüssen (5, 6) des Abdeckelements (2) in Fluidverbindung.

12. Kraftstoffzufuhrmodul (1) nach einem der Ansprüche 8 bis 11, weiter umfassend Mittel (9) zum Erkennen des Niveaus von Kraftstoff in dem Kraftstofftank und/oder dem Kraftstoffbehältergehäuse (3).

## Revendications

1. Élément couvercle (2) d'un module de distribution de carburant (1) comprenant un chapeau (4) ayant une pluralité de régions pré-marquées (23) correspondant à des emplacements potentiels d'orifices de sortie et d'entrée ;
lesdites régions pré-marquées (23) comprenant des régions affaiblies mécaniquement configurées de façon à ce que des orifices de sortie et d'entrée puissent être formés après la fabrication de l'élément couvercle (2) en créant une ouverture dans le chapeau (4) à l'endroit d'une ou de plusieurs desdites régions affaiblies mécaniquement ;
**caractérisé en ce que** lesdites régions pré-marquées (23) indiquent des emplacements potentiels d'orifices de sortie et d'entrée compatibles avec plus d'un type de moteur ;
et **en ce que** lesdites régions pré-marquées (23) sont identifiées relativement au type de moteur particulier pour lequel cet emplacement d'orifice est requis.

2. Élément couvercle (2) selon la revendication 1, dans lequel l'ouverture dans le chapeau est formée par perçage.

3. Élément couvercle (2) selon la revendication 1, dans lequel l'ouverture dans le chapeau est formée par poinçonnage.

4. Élément couvercle (2) selon la revendication 1, dans lequel l'ouverture dans le chapeau est formée par estampage.

5. Élément couvercle (2) selon la revendication 1, dans lequel un orifice (5) est fait dans le chapeau (4) en insérant un adaptateur (15) à travers un emplacement d'orifice pré-marqué dans le chapeau.

6. Élément couvercle (2) selon l'une quelconque des revendications précédentes, comprenant en outre un premier moyen de fixation pour attacher de manière amovible l'élément couvercle (2) au module de distribution de carburant (1) et/ou un deuxième moyen de fixation pour monter ledit module de distribution de carburant (1) à l'intérieur d'un réservoir de carburant d'un véhicule automobile.

7. Élément couvercle (2) selon l'une quelconque des revendications précédentes, dans lequel au moins une ouverture a été formée dans le couvercle (4) en enlevant au moins une desdites régions pré-marquées pour former un orifice de sortie.

8. Module de distribution de carburant (1) pour un véhicule automobile, comprenant :
un moyen pour monter le module de distribution de carburant (1) à l'intérieur d'un réservoir de carburant dudit véhicule automobile ; et
un élément couvercle (2) selon la revendication 7.

9. Module de distribution de carburant (1) selon la revendication 8, comprenant en outre une pompe à carburant primaire pour pomper du carburant dudit réservoir de carburant vers un orifice de sortie (5).

10. Module de distribution de carburant (1) selon la revendication 8 ou la revendication 9, comprenant en outre un logement de réserve de carburant (3) ayant un moyen pour une communication fluidique avec ledit réservoir de carburant.

11. Module de distribution de carburant (1) selon la revendication 10, dans lequel le logement de réserve de carburant (3) est relié à l'élément couvercle (2) via au moins une tige (7, 8), et dans lequel le logement de réserve de carburant (3) est en communication fluidique avec un ou plusieurs orifices (5, 6) de l'élément couvercle (2) via un ou plusieurs conduits.

12. Module de distribution de carburant (1) selon l'une quelconque des revendications 8 à 11, comprenant en outre un moyen (9) pour détecter le niveau de carburant dans le réservoir de carburant et/ou dans le logement de réserve de carburant (3)
